# EUROPEAN PATENT SPECIFICATION

(11) **EP 1 690 450 B1**
(45) Date of publication and mention of the grant of the patent: **12.03.2008**
(21) Application number: 06075004.9
(22) Date of filing: 04.01.2006
(51) Int. Cl.: A01K 1/01

(54) **An unmanned vehicle for displacing manure**
Unbemanntes Fahrzeug zum verschieben von Mist
Véhicule sans conducteur pour déplacer le fumier

(30) Priority: 11.02.2005 NL 1028259
(43) Date of publication of application: 16.08.2006
(73) Proprietor: Lely Enterprises AG, 6300 ZUG (CH)
(72) Inventor: Van den Berg, Karel, 2971 BR Bleskensgraaf (NL)
(74) Representative: Corten, Maurice Jean F.M.

(56) References cited:
- EP-A- 1 371 285
- DE-A- 10 309 106
- US-A- 3 100 043
- US-A- 3 778 865

## Description

The invention relates to an unmanned vehicle according to the preamble of claim 1.

Such an unmanned vehicle has been described, for example, in EP-A-0 943 235. Although this unmanned vehicle functions properly, it has been found that, in particular when using a rigid manure slide as a manure displacing device, it is possible for the unmanned vehicle to catch behind small obstacles projecting from the floor of a stable, such as bolt heads or grid parts that are not located at the same level. Moreover, it has been found that smaller thresholds of approximately 20 mm height cannot be taken by the unmanned vehicle.

EP-A1-1.371.285 discloses an unmanned vehicle for displacing manure over a stable floor. The vehicle comprises a steering unit for steering the vehicle and moving in a direction of travel. The steering unit is constituted by a propelling unit comprising two independently driven wheels. The vehicle further comprises a frame and manure slide. The unmanned vehicle further comprises a castor wheel.

US-3.778.865 discloses a utility vehicle that picks ups items, such as grass leaves or dirt by means of a suction nozzle with a suction opening. This suction nozzle is carried by a suction conduit, comprising a downwardly directed section. This downwardly directed section is held in an inclined position by means of guide means.

It is an object of the invention to obviate the above-mentioned drawbacks.

For this purpose, an unmanned vehicle of the above-described type according to the invention comprises the features of the characterizing part of claim 1. The advantage of this unmanned vehicle is that the device for taking an obstacle is capable of lifting the unmanned vehicle over smaller projecting obstacles and/or smaller thresholds, so that the unmanned vehicle will not undesirably come to a standstill. This makes it possible to displace manure more accurately and completely and relatively quickly from the floor of a stable.

According to the invention, the device is disposed on the unmanned vehicle in such a way that it is located at some distance above the floor in the normal operative position of the unmanned vehicle. As a device may be used, for example, a wheel, roll, bar or the like. The distance from the device to the floor is preferably adjustable.

In an alternative embodiment of an unmanned vehicle according to the invention, the device is disposed on the unmanned vehicle in such a way that it is in contact with the floor in the normal operative position of the unmanned vehicle. The device for taking an obstacle is preferably a sliding shoe.

The sliding shoe has preferably bevelled edges. If the sliding shoe is round, smaller obstacles and/or smaller thresholds can be bridged, irrespective of the position of the sliding shoe relative to said obstacles and/or thresholds. Because of the fact that, in that case, the sliding shoe has a diameter which decreases in the direction of the floor of a stable, it is possible for the sliding shoe to slide in a simple manner over smaller obstacles and/or smaller thresholds.

The device for taking an obstacle is advantageously directly fastened to the frame, so that the entire frame is lifted when the device slides over smaller obstacles and/or smaller thresholds, so that sudden forces caused by sliding over smaller obstacles and/or smaller thresholds are absorbed by the entire unmanned vehicle.

The device for taking an obstacle is alternatively fastened to the manure displacing means, it being in particular advantageous if the manure displacing means are suspended from the frame in such a way that they are capable of swivelling. In this manner it is ensured that, when the device slides over a smaller, discrete obstacle, the manure displacing means are moved in such a swivelling way that it is possible for the manure displacing means, and consequently the unmanned vehicle, to pass along the smaller obstacle in a simple manner.

The manure displacing means advantageously comprise a manure slide, so that the manure can be slid from the floor. The manure slide is preferably made of flexible material, the flexibility being chosen in such a way that, when displacing manure, the manure slide will at least substantially keep its shape, whereas, when colliding with a small obstacle that is rigidly fitted in or on the floor, the manure slide will deform in such a way that it is capable of passing along the obstacle.

In an embodiment of an unmanned vehicle according to the invention which is extremely advantageous for displacing manure, the manure slide has a curved shape and two free ends, the free ends being located further in the direction of travel than the other components of the manure slide. The device is then preferably partially located in the area formed by the imaginary line between the free ends of the manure slide and the manure slide itself.

In a further embodiment of an unmanned vehicle according to the invention, the unmanned vehicle is provided with a propelling device comprising wheels for propelling the unmanned vehicle, only the wheels and the manure displacing means being necessary for supporting the unmanned vehicle in the normal operative position, the device for taking an obstacle being disposed, seen in the normal direction of travel, before the wheels and the manure displacing means. In other words, the device for taking an obstacle is not necessary for supporting the unmanned vehicle, so that the device can be detachably disposed on the unmanned vehicle, and the unmanned vehicle can also be used without the device for taking an obstacle.

The invention will now be explained in further detail with reference to the drawing, in which
Figure 1 is a schematic plan view of the unmanned vehicle according to the invention,
Figure 2 is a schematic side view of the unmanned vehicle according to the invention,
Figure 3 is a schematic front view of the unmanned vehicle according to the invention, and
Figure 4 is a schematic perspective view of a curved manure slide with sliding shoe of the unmanned vehicle according to the invention.

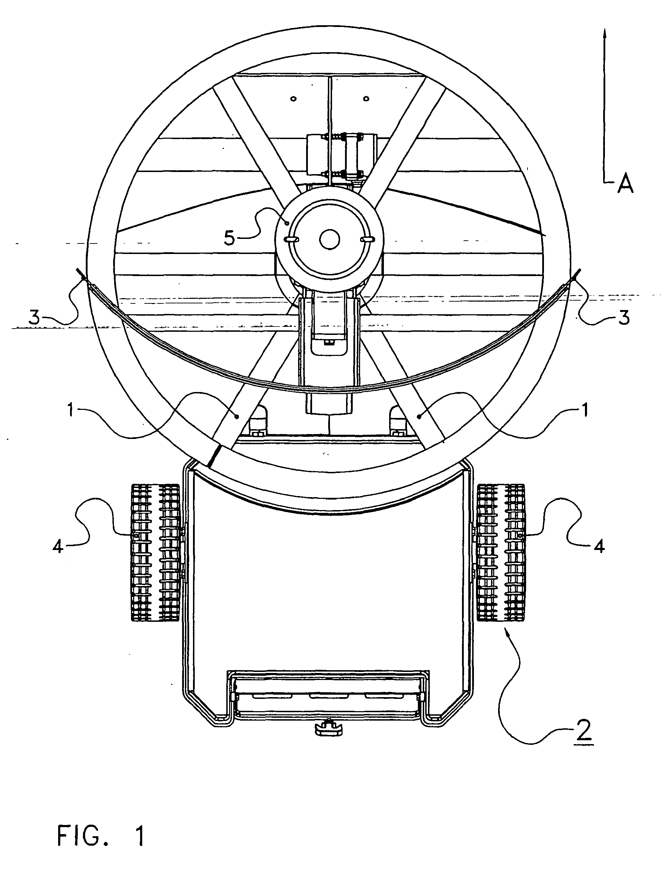

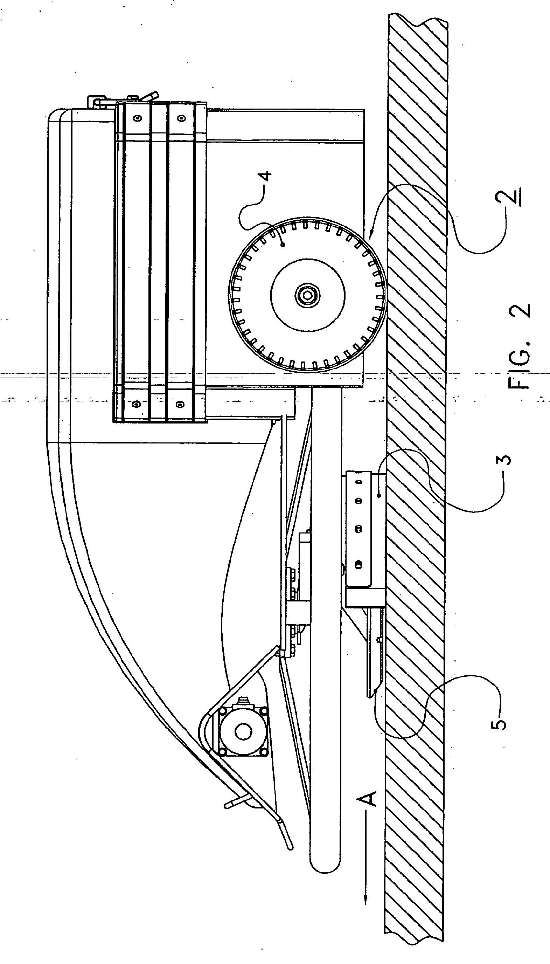

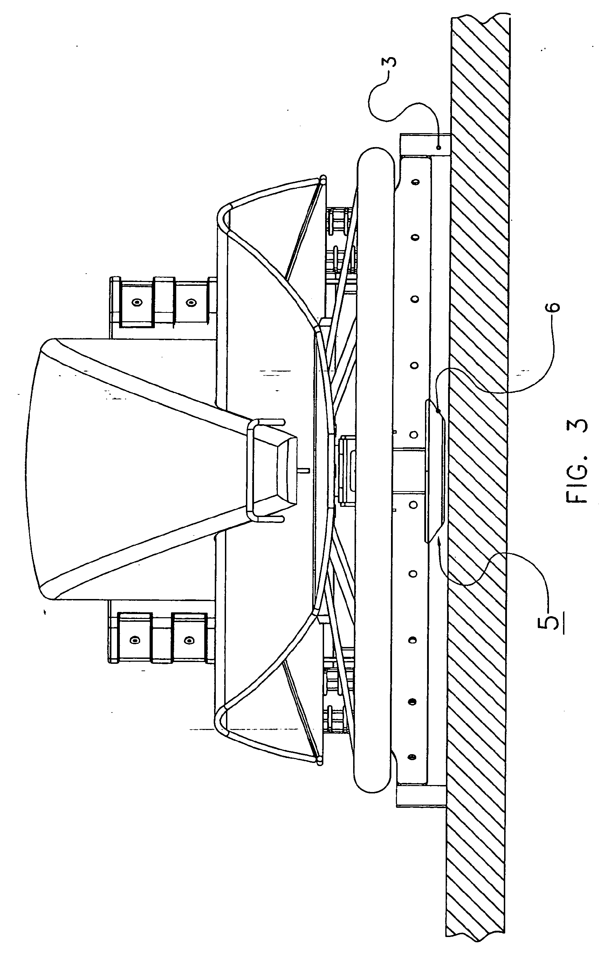

The unmanned vehicle as shown in Figures 1 to 3 consists of a frame 1 on which a propelling device 2 and a manure slide 3 are disposed, although other manure displacing means, such as grippers and the like, may be used as well. In the embodiment shown, the steering unit comprises the propelling device 2, which comprises two independently driven wheels 4. Alternatively, the steering unit may comprise a controllable wheel which is capable of pivoting in the direction of travel. In this embodiment, manoeuvring the vehicle is possible by varying the drive torque or the peripheral velocity of the wheels 4. The wheels 4 may comprise a wheel and/or a caterpillar track.

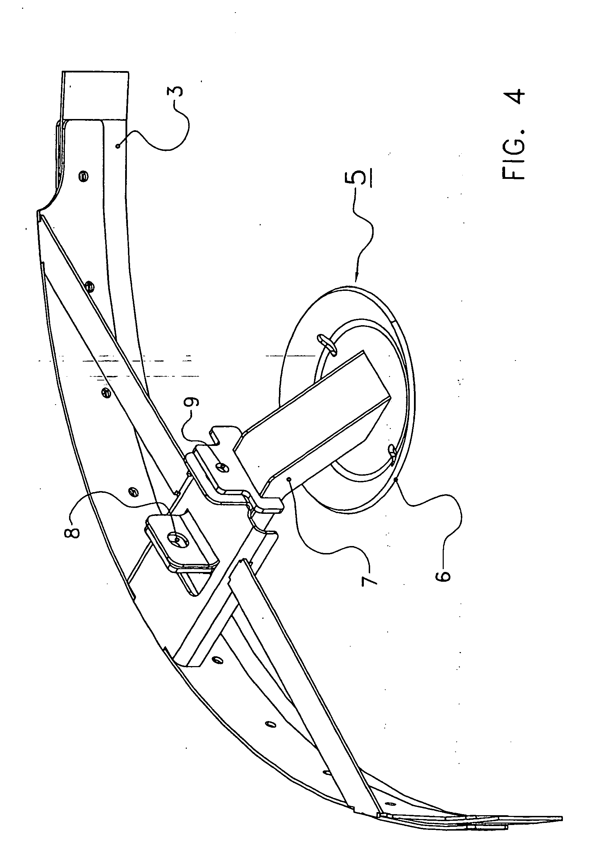

The unmanned vehicle is provided with a sliding shoe 5 which, seen in the direction of travel A, is disposed before the manure slide 3. In the embodiment shown schematically in a perspective view in Figure 4, the sliding shoe 5 is round and has a bevelled edge 6, so that the sliding shoe 5 has a diameter which decreases in the direction of the floor of a stable. This makes it possible for the sliding shoe 5 to slide in a simple manner over smaller obstacles and/or thresholds. Via a fastening device 7, the sliding shoe 5 is fastened to the manure slide 3, which is suspended itself, via an axis indicated by the apertures 8 and 9 in the fastening device 7, from the frame in such a way that it is capable of swivelling. By pressure generating means known per se it is then possible for the manure slide to be pressed against the floor, with adjustable force if desired, for effectively displacing manure. Although not shown in the figures, the manure slide 3 may also be suspended in such a way that it is capable of swivelling in a direction perpendicular to the direction defined by the apertures 8 and 9, for example by means of a drawbar, a parallelogram construction or in general by means of two hinges.

In a non-shown alternative embodiment, the sliding shoe may be fastened directly to the frame. Furthermore, the invention may be applied while using other means than a sliding shoe for taking an obstacle, which means are in contact with the floor in the normal operative position of the unmanned vehicle. Alternatively, the device for taking an obstacle may be disposed on the unmanned vehicle in such a way that, in the normal operative position, said device, for example in the form of a wheel, roll, bar or the like, is located at some (preferably adjustable) distance from the floor.

In the embodiment shown in the figures the manure slide 3 is made of flexible material. In this case, the flexibility is such a way that, when displacing manure, the manure slide will at least substantially keep its shape, whereas, when colliding with a small obstacle that is rigidly fitted in or on the floor, the manure slide will deform in such a way that it is capable of passing along the obstacle. The manure slide 3 shown in the figures is also curved and has two free ends, which are located further in the direction of travel than the other parts of the manure slide 3. As is apparent from Figure 1, the sliding shoe 5 is partially located in the area formed by the imaginary line between the ends of the manure slide 3 and the manure slide 3 itself.

The unmanned vehicle is supported by the wheels 4 and the manure slide 3, the sliding shoe 5 not being necessary for the support of the unmanned vehicle. Seen in the normal direction of travel A, the sliding shoe 5 is located before the supporting components of the unmanned vehicle, i.e. before the wheels and the manure slide.

It will be obvious that the invention is not limited to the preferred embodiments of the unmanned vehicle shown in the figures and described in the foregoing, but that numerous modifications are possible within the scope of the accompanying claims. The manure slide as well as the sliding shoe may, for example, be designed linearly. Furthermore, the sliding shoe may be detachably fastened to the unmanned vehicle, so that it is possible to use the unmanned vehicle with and without sliding shoe.

## Claims

1. An unmanned vehicle for displacing manure over the floor of a stable, comprising a steering unit for steering the vehicle and moving it in a direction of travel, a frame (1) and manure displacing means for displacing manure, **characterized in that** the unmanned vehicle is provided with a device (5), for taking an obstacle, which device is disposed, seen in the direction of travel, before the manure displacing means, wherein the device (5) is disposed on the unmanned vehicle in such a way that it is located at some distance above the floor in the normal operative position of the unmanned vehicle, or
wherein the device, not being a wheel, is in contact with the floor during normal operation of the unmanned vehicle.

2. An unmanned vehicle as claimed in claim 1, **characterized in that** the distance from the device (5) to the floor is adjustable.

3. An unmanned vehicle as claimed in claim 1 or 2, **characterized in that** the device (5) is a sliding shoe.

4. An unmanned vehicle as claimed in claim 3, **characterized in that** the sliding shoe (5) has bevelled edges (6).

5. An unmanned vehicle as claimed in claim 3 or 4, **characterized in that** the sliding shoe (5) is round.

6. An unmanned vehicle as claimed in any one of the preceding claims, **characterized in that** the device (5) is directly fastened to the frame (1).

7. An unmanned vehicle as claimed in any one of claims 1 to 5, **characterized in that** the device (5) is fastened to the manure displacing means.

8. An unmanned vehicle as claimed in any one of the preceding claims, **characterized in that** the manure displacing means are suspended from the frame (1) in such a way that they are capable of swivelling.

9. An unmanned vehicle as claimed in any one of the preceding claims, **characterized in that** the manure displacing means comprise a manure slide (3).

10. An unmanned vehicle as claimed in claim 9, **characterized in that** the manure slide (3) is made of flexible material.

11. An unmanned vehicle as claimed in claim 9 or 10, **characterized in that** the manure slide (3) is curved and has two free ends, the free ends being located further in the direction of travel than the other components of the manure slide (3).

12. An unmanned vehicle as claimed in claim 11, **characterized in that** the device (5) is partially located in the area formed by the imaginary line between the free ends of the manure slide (3) and the manure slide (3) itself.

13. An unmanned vehicle as claimed in any one of the preceding claims, **characterized in that** the unmanned vehicle is provided with a propelling device (2) comprising wheels (4) for propelling the unmanned vehicle, only the wheels (4) and the manure displacing means being necessary for supporting the unmanned vehicle in the normal operative position, the device (5) for taking an obstacle being disposed, seen in the normal direction of travel, before the wheels (4) and the manure displacing means.

14. An unmanned vehicle as claimed in any one of the preceding claims, **characterized in that** the device for taking an obstacle is detachably disposed on the unmanned vehicle.

## Patentansprüche

1. Unbemanntes Fahrzeug zum Verlagern von Mist auf dem Boden eines Stalles mit einer Lenkeinheit zum Lenken und Bewegen des Fahrzeugs in Arbeitsrichtung, mit einem Rahmen (1) und mit einer Mistverlagerungsvorrichtung zum Verlagern von Mist,
**dadurch gekennzeichnet, dass** das unbemannte Fahrzeug mit einer Vorrichtung (5) zum Überwinden eines Hindernisses versehen ist, wobei die Vorrichtung in Fahrtrichtung gesehen vor der Mistverlagerungsvorrichtung angeordnet ist, wobei die Vorrichtung (5) an dem unbemannten Fahrzeug derart angebracht ist, dass sie in der normalen Arbeitslage des unbemannten Fahrzeugs in einigem Abstand über dem Boden angeordnet ist, oder wobei die Vorrichtung, bei der es sich nicht um ein Rad handelt, während des normalen Betriebs des unbemannten Fahrzeugs in Kontakt mit dem Boden steht.

2. Unbemanntes Fahrzeug nach Anspruch 1,
**dadurch gekennzeichnet, dass** der Abstand zwischen der Vorrichtung (5) und dem Boden einstellbar ist.

3. Unbemanntes Fahrzeug nach Anspruch 1 oder 2,
**dadurch gekennzeichnet, dass** die Vorrichtung (5) ein Gleitschuh ist.

4. Unbemanntes Fahrzeug nach Anspruch 3,
**dadurch gekennzeichnet, dass** der Gleitschuh (5) abgeschrägte Ränder (6) hat.

5. Unbemanntes Fahrzeug nach Anspruch 3 oder 4,
**dadurch gekennzeichnet, dass** der Gleitschuh (5) rund ist.

6. Unbemanntes Fahrzeug nach einem der vorhergehenden Ansprüche,
**dadurch gekennzeichnet, dass** die Vorrichtung (5) direkt an dem Rahmen (1) befestigt ist.

7. Unbemanntes Fahrzeug nach einem der Ansprüche 1 bis 5,
**dadurch gekennzeichnet, dass** die Vorrichtung (5) an der Mistverlagerungsvorrichtung befestigt ist.

8. Unbemanntes Fahrzeug nach einem der vorhergehenden Ansprüche,
**dadurch gekennzeichnet, dass** die Mistverlagerungsvorrichtung an dem Rahmen (1) derart aufgehängt ist, dass sie schwenkbar ist.

9. Unbemanntes Fahrzeug nach einem der vorhergehenden Ansprüche,
**dadurch gekennzeichnet, dass** die Mistverlagerungsvorrichtung einen Mistschieber (3) umfasst.

10. Unbemanntes Fahrzeug nach Anspruch 9,
**dadurch gekennzeichnet, dass** der Mistschieber (3) aus einem flexiblen Material besteht.

11. Unbemanntes Fahrzeug nach Anspruch 9 oder 10,
**dadurch gekennzeichnet, dass** der Mistschieber (3) gekrümmt ist und zwei freie Enden hat, wobei die freien Enden in Fahrtrichtung gesehen weiter vorn liegen als die anderen Teile des Mistschiebers (3).

12. Unbemanntes Fahrzeug nach Anspruch 11,
**dadurch gekennzeichnet, dass** die Vorrichtung (5) teilweise in dem Bereich angeordnet ist, der durch die gedachte Linie zwischen den freien Enden des Mistschiebers (3) und den Mistschieber (3) selbst gebildet ist.

13. Unbemanntes Fahrzeug nach einem der vorhergehenden Ansprüche,
**dadurch gekennzeichnet, dass** das unbemannte Fahrzeug mit einer Fortbewegungsvorrichtung (2) versehen ist, die Räder (4) zum Fortbewegen des unbemannten Fahrzeugs umfasst, wobei nur die Räder (4) und die Mistverlagerungsvorrichtung erforderlich sind, um das unbemannte Fahrzeug in der normalen Arbeitslage abzustützen, wobei die Vorrichtung (5) zum Überwinden eines Hindernisses in Arbeitsrichtung gesehen vor den Rädern (4) und der Mistverlagerungsvorrichtung angeordnet ist.

14. Unbemanntes Fahrzeug nach einem der vorhergehenden Ansprüche,
**dadurch gekennzeichnet, dass** die Vorrichtung zum Überwinden eines Hindernisses lösbar an dem unbemannten Fahrzeug angebracht ist.

## Revendications

1. Véhicule sans conducteur permettant de déplacer du fumier sur le plancher d'une écurie, comprenant une unité de direction pour diriger le véhicule et le mouvoir dans une direction de déplacement, un châssis (1) et des moyens de déplacement de fumier pour déplacer le fumier, **caractérisé en ce que** le véhicule sans conducteur est pourvu d'un dispositif (5), pour passer un obstacle, lequel dispositif est disposé, vu dans la direction de déplacement, avant les moyens de déplacement de fumier, dans lequel le dispositif (5) est disposé sur le véhicule sans conducteur de façon à être situé à une certaine distance au-dessus du plancher dans la position de fonctionnement normal du véhicule sans conducteur, ou bien
dans lequel le dispositif, qui n'est pas une roue, est en contact avec le plancher pendant le fonctionnement normal du véhicule sans conducteur.

2. Véhicule sans conducteur selon la revendication 1, **caractérisé en ce que** la distance entre le dispositif (5) et le plancher est réglable.

3. Véhicule sans conducteur selon la revendication 1 ou 2, **caractérisé en ce que** le dispositif (5) est un patin glissant.

4. Véhicule sans conducteur selon la revendication 3, **caractérisé en ce que** le patin glissant (5) a des bords biseautés (6).

5. Véhicule sans conducteur selon la revendication 3 ou 4, **caractérisé en ce que** le patin coulissant (5) est arrondi.

6. Véhicule sans conducteur selon l'une quelconque des revendications précédentes, **caractérisé en ce que** le dispositif (5) est directement fixé au châssis (1).

7. Véhicule sans conducteur selon l'une quelconque des revendications 1 à 5, **caractérisé en ce que** le dispositif (5) est fixé aux moyens de déplacement de fumier.

8. Véhicule sans conducteur selon l'une quelconque des revendications précédentes, **caractérisé en ce que** les moyens de déplacement de fumier sont suspendus au châssis (1) de façon à pouvoir pivoter.

9. Véhicule sans conducteur selon l'une quelconque des revendications précédentes, **caractérisé en ce que** les moyens de déplacement de fumier comprennent un racloir à fumier (3).

10. Véhicule sans conducteur selon la revendication 9, **caractérisé en ce que** le racloir à fumier (3) est constitué d'un matériau souple.

11. Véhicule sans conducteur selon la revendication 9 ou 10, **caractérisé en ce que** le racloir à fumier (3) est courbe et présente deux extrémités libres, les extrémités libres étant situées plus loin dans la direction de déplacement que les autres composants du racloir à fumier (3).

12. Véhicule sans conducteur selon la revendication 11, **caractérisé en ce que** le dispositif (5) est partiellement situé dans la région formée par la ligne imaginaire reliant les extrémités libres du racloir à fumier (3) et le racloir à fumier (3) lui-même.

13. Véhicule sans conducteur selon l'une quelconque des revendications précédentes, **caractérisé en ce que** le véhicule sans conducteur est pourvu d'un dispositif de propulsion (2) comprenant des roues (4) permettant de propulser le véhicule sans conducteur, seules les roues (4) et les moyens de déplacement de fumier étant nécessaires pour supporter le véhicule sans conducteur dans la position de fonctionnement normale, le dispositif (5) servant à passer un obstacle étant disposé, vu dans la direction déplacement normale, avant les roues (4) et les moyens de déplacement de fumier.

14. Véhicule sans conducteur selon l'une quelconque des revendications précédentes, **caractérisé en ce que** le dispositif permettant de passer un obstacle est disposé de manière détachable sur le véhicule sans conducteur.
